# EUROPÄISCHE PATENTSCHRIFT

(11) **EP 3 250 896 B1**
(45) Veröffentlichungstag und Bekanntmachung des Hinweises auf die Patenterteilung: **27.11.2019**
(21) Anmeldenummer: 16701427.3
(22) Anmeldetag: 15.01.2016
(51) Int. Cl.: F16C 35/073, F16C 19/52, G01L 9/00, G01P 3/44, G01L 3/10, G01L 5/00, G01L 1/18

(54) **SENSORANORDNUNG ZUR INDIREKTEN ERFASSUNG EINES DREHMOMENTS EINER ROTIERBAR GELAGERTEN WELLE**
SENSOR ARRANGEMENT FOR INDIRECT DETECTION OF A TORQUE OF A ROTATABLY MOUNTED SHAFT
ENSEMBLE CAPTEUR POUR L'ENREGISTREMENT INDIRECT D'UN COUPLE DE ROTATION D'UN ARBRE MONTÉ EN ROTATION

(30) Priorität: 29.01.2015 DE 102015201577
(43) Veröffentlichungstag der Anmeldung: 06.12.2017
(73) Patentinhaber: Robert Bosch GmbH, 70442 Stuttgart (DE)
(72) Erfinder: KLOPF, Frank, 81543 Muenchen (DE); SCHNEIDER, Simon, 72762 Reutlingen (DE)
(86) Internationale Anmeldenummer: PCT/EP2016/050747
(87) Internationale Veröffentlichungsnummer: WO 2016/120095

(56) Entgegenhaltungen:
- EP-A1- 1 696 216
- EP-A2- 0 735 352
- WO-A1-2010/144964
- DE-A1- 10 136 438
- DE-A1-102010 003 050
- US-A1- 2003 233 888

## Beschreibung

Die Erfindung geht aus von einer Sensoranordnung zur indirekten Erfassung eines Drehmoments einer rotierbar gelagerten Welle nach der Gattung des unabhängigen Patentanspruchs 1.

Sensoren zur Erfassung des Drehmoments stellen wichtige Komponenten von Motor- und Getriebeprüfständen aller Art dar. Sie sind darüber hinaus integraler Bestandteil vieler großindustriell eingesetzter Antriebssysteme. Mit ihrer Hilfe werden beispielsweise die Drehmomente in Schiffswellen, Windkraftanlagen oder Bohrgestängen überwacht. Drehmomentsensoren sind weit verbreitet, ihr vergleichsweise komplexer Aufbau und die damit verbundenen Kosten verhindern jedoch bisher ihren Einsatz in Massengütern. Die Messung des Drehmoments der Antriebswelle von Elektrofahrrädern stellt den ersten potentiellen Massenmarkt für Drehmomentsensoren dar, die für Industrieanlagen verwendeten Sensorkonzepte sind hierfür allerdings zu teuer.

Bei vielen Prüfständen oder Kalibriereinrichtungen genügt die Erfassung des Drehmoments mittels eines statischen Aufnehmers. Hierbei wird die Welle, deren Drehmoment erfasst werden soll, mit der einen Seite eines Verformungselements verbunden. Das andere Ende des auch Federkörper genannten Verformungskörpers wird mit einem feststehenden Konstruktionselement, wie zum Beispiel einem Träger oder einem Gehäuseteil verbunden. Das angreifende Drehmoment führt zu einer Verformung des Federkörpers durch Torsion. Die resultierende Verdrehung beträgt einige wenige Grad und kann durch eine Vielzahl von bekannten Messverfahren detektiert werden. Gebräuchlich sind hier vor allem magnetische Verfahren, die die Verdrehung einer an dem Federkörper angebrachten magnetischen Struktur relativ zu einem feststehenden Magnetfeldsensor erfassen. Auch optische Verfahren sind hierfür geeignet.

Alternativ ist es möglich, die in dem Federkörper aufgrund der Verformung entstehenden Materialdehnungen zu erfassen. Je nach Konstruktion resultieren diese aus Torsionsmomenten oder Scherkräften. Zur Messung dieser Materialdehnungen werden in der Regel aufgeklebte piezoresistive Dehnmessstreifen verwendet, die zu einer Wheatstonebrücke verschaltet sind. Alternativ können diese Dehnungen auch mittels des magnetoelastischen Messprinzips erfasst werden. Dieses beruht darauf, dass sich die Permeabilität ferromagnetischer Materialien bei eingebrachten Materialspannungen ändert. Diese Änderungen können durch eine geeignete Sensorik beispielsweise in Form eines Aufbaus mit Sender- und Empfängerspulen berührungslos erfasst werden.

Bei den meisten Anwendungen genügt die oben beschriebene statische Erfassung des Drehmoments nicht. Vielmehr ist es erforderlich, das Drehmoment von sich drehenden Wellen zu bestimmen. Hierfür wurden mitrotierende Sensoren entwickelt, die in die Antriebswelle integriert sind und deren Torsion messen. Dies erfolgt normalerweise über eines der beiden oben beschriebenen Verfahren zur Bestimmung der durch die Torsion hervorgerufenen Materialdehnungen.

Bei der Verwendung von Dehnmessstreifen (DMS) ergibt sich die Problematik, dass an einem rotierenden System weder die Versorgung der Messbrücke noch der Signalabgriff über eine Kabelverbindung erfolgen können. Die Versorgung wird üblicherweise durch die Übertragung einer Wechselspannung mittels einer Transformatoranordnung bewerkstelligt, bei der eine Spule um die Antriebswelle gewickelt ist und sich folglich mitdreht. Die andere Spule steht fest und umgibt die Welle in einem etwas größeren Abstand. Zusammen mit der Welle, die als Eisenkern wirkt, ergibt sich so ein Transformator mit vergleichsweise guten Eigenschaften. Da die Ausgangssignale von DMS-Brücken relativ klein sind, erfolgt die Signalauswertung und Verstärkung in unmittelbarer Nähe der Messbrücke also durch eine sich mitdrehende Elektronik. Deren Ausgangssignal kann nun beispielsweise durch eine Sender- und eine Empfängerspule oder durch eine weitere Elektronik mittels eines Funkstandards nach außen, das heißt zum feststehenden Teil des Sensors übermittelt werden. Solche Sensoren und alle für sie benötigten Komponenten sind aus dem Stand der Technik bekannt. Sie erfüllen die an sie gestellten Anforderungen, erfordern aber wie oben bereits ausgeführt ist, einen hohen konstruktiven Aufwand. Im Bereich der mitrotierenden Drehmomentsensoren haben magnetoelastische Sensoren prinzipbedingte Vorteile, da das verwendete Messverfahren berührungslos ist. Das Problem der Kontaktierung sich drehender Komponenten stellt sich hier also gar nicht, was sich in einem geringeren konstruktiven Aufwand niederschlägt.

Sowohl mit piezoresistiven als auch mit magnetoelastischen Sensoren lassen sich die Drehmomente an rotierenden Wellen sehr gut messen. Ihr größter Vorteil ist dabei das direkte Messprinzip. Die von ihnen erfasste Torsion der Welle steht in einem direkten Zusammenhang mit dem Drehmoment. Hieraus erwächst aber auch ihr größter Nachteil. Die Eigenschaften von Welle und Sensor sind untrennbar miteinander verbunden. Diese Sensoren lassen sich nicht auf einer bestehenden Welle applizieren, da die elastischen und/oder magnetischen Eigenschaften der Welle die Sensorcharakteristik dominieren. Die Drehmomentsensoren sind vielmehr selbst Teil der Welle. Ihre spezifischen Anforderungen müssen daher von Beginn an bei Konstruktion des gesamten Antriebsstrangs berücksichtigt werden. Eine für ein System gefundene konstruktive Lösung lässt sich nicht einfach auf eine andere Anwendung übertragen. Dies führt dazu, dass zum Beispiel die Hersteller von magnetoelastischen Sensoren ein Gesamtpaket aus Welle (inklusive aller Zahnräder), integriertem Drehmomentsensor und der benötigten Lager anbieten. Diese Integration stellt vor allem fertigungstechnisch eine gute Lösung dar. Sie ist allerdings ebenfalls stark anwendungsspezifisch und lässt sich somit nur schwer bis gar nicht für andere Applikationen verwenden. Hierdurch sind die Stückzahlen und damit auch die Kostenpotentiale für solche Lösungen naturgemäß begrenzt.

Alternativ zur direkten Messung des Drehmoments ist es möglich, die bei der Übertragung des Drehmoments von einer Welle auf eine andere Welle entstehenden Kräfte auf deren Lager zu messen und hieraus auf das Drehmoment zu schließen. Dieser indirekte Ansatz ist aus dem Stand der Technik bekannt und beispielsweise in den Dokumenten DE10 2012 200 232 A1 und DE10 2010 027 010 A1 offenbart. Diese Dokumente enthalten aber keinerlei konkrete Umsetzung, wie die Messung der Lagerkräfte erfolgen kann.

Aus der EP 0 735 352 A2 ist ein Kraftaufnehmer mit schmalen Dehnungsmesstreifen bekannt.

Aus der WO 2010/144964 A1 ist ein Verfahren zur Bestimmung des an einer Pedalachse unter Last anliegenden Drehmoments bekannt, welches eine Messung der Größe und Orientierung der von der Pedalachse erfahrenen Belastung als Ergebnis der Last durchführt. Das Drehmoment wird dann basierend auf der gemessenen Orientierung und Größe der Belastung der Pedalachse bestimmt.

Aus der US 2004/0233888 A1 sind ein System und ein Verfahren zur Bestimmung eines Drehmomentwertes innerhalb eines Getriebes bekannt, wobei aus einer axialen Kraft eines drehmomentübertragenden Zahnrads im Getriebe, insbesondere aus einer gemessenen Lagerkraft dieses Zahnrades, ein Ist-Drehmoment ermittelt wird. Das Zahnrad ist auf einer Welle angeordnet, welche, in einem Gehäuse durch Lager gelagert ist, wobei die Welle an ihren Enden vergrößerte Radiusabschnitte aufweist, welche jeweils eine Kraft gegen eine kraftaufnehmende Scheibe ausüben. Die kraftaufnehmenden Scheiben können als piezoelektrischer Wandler ausgeführt werden und separat ausgeführt oder in die Lager oder in das Zahnrad integriert werden.

Aus der DE 10 2010 003 050 A1 ist ein Fahrrad mit einem Kurbeltrieb, einem Elektroanrieb und einer Antriebswelle bekannt, welche mit dem Kurbeltrieb und dem Elektromotor verbunden ist. Die Antriebswelle ist an einem ersten Lager und an einem zweiten Lager gelagert, wobei am ersten Lager eine Einrichtung zur Lagerkraftmessung angeordnet ist, welche ein zwischen einer ersten Lagerschale und einer zweiten Lagerschale angeordnetes Piezoelement umfasst.

Aus der DE 101 36 438 A1 sind eine Sensoranordnung in einem Wälzlager und ein Verfahren zur Auswertung des Sensorsignals bekannt. Die Sensoranordnung ist zur Detektierung physikalischer Größen in einem Wälzlager während der Bewegung der im Wälzlager geführten Bauteile geeignet. Es werden die auf die Lagerschale oder Lagerschalen des Wälzlager wirkenden Kräfte und Momente derart erfasst, dass die mechanischen Spannungen oder sonstige physikalische Beeinflussung der Lagerschalen mit direkt in die Lagerschalen integrierten Sensorelementen und auch eventuell damit zusammengefassten Elektronikbauteilen detektiert werden.

Aus der EP 1 696 216 A1 ist eine gattungsgemäße Sensoranordnung zur indirekten Erfassung eines Drehmoments einer rotierbar gelagerten Welle bekannt, welche über ein Lager an eine tragende Struktur angebunden ist. Die Sensoranordnung umfasst einen Sensor, welcher ein Sensorelement umfasst, welches mit einem vorgegebenen Abstand und einem vorgegebenen Winkel zum Lager im Umfeld des Lagers angeordnet ist und einen in eine vorgegebene Richtung wirkenden Anteil einer Lagerkraft erfasst, aus welcher das Drehmoment der Welle berechenbar ist. Der Sensor weist einen Sensorkörper mit einer Außenkontur auf, welcher ein korrespondierendes Sensorelement trägt und direkt in eine Aufnahmebohrung der tragenden Struktur eingepresst ist.

### Offenbarung der Erfindung

Die erfindungsgemäße Sensoranordnung zur indirekten Erfassung eines Drehmoments einer rotierbar gelagerten Welle mit den Merkmalen des unabhängigen Patentanspruchs 1 hat demgegenüber den Vorteil, dass über die Erfassung der Lagerkräfte der Welle das Drehmoment der Welle indirekt gemessen werden kann. Hierfür werden vorzugsweise piezoresistive Sensorelemente verwendet, welche sich in Dünnschichttechnologie kostengünstig herstellen lassen. Das mindestens eine Sensorelement wird in die das Lager umgebende tragende Struktur eingebracht und erfasst die aufgrund der Lagerkräfte entstehenden Materialdehnungen bzw. Materialstauchungen. Die einzelnen Sensorelemente lassen sich sehr kompakt gestalten, miniaturisieren und sehr kostengünstig herstellen. Ausführungsformen der erfindungsgemäßen Sensoranordnung zur indirekten Erfassung eines Drehmoments einer rotierbar gelagerten Welle erfordern in vorteilhafter Weise nur geringe konstruktive Änderungen im Bereich der Lager. Die Auslegung der Wellen ist hiervon nicht betroffen. Daher ist der Einsatz von Ausführungsformen der erfindungsgemäßen Sensoranordnung zur indirekten Erfassung eines Drehmoments einer rotierbar gelagerten Welle prinzipiell auch bei bestehenden Systemen mit nur geringen Anpassungen möglich.

Ausführungsformen der vorliegenden Erfindung stellen eine Sensoranordnung zur indirekten Erfassung eines Drehmoments einer rotierbar gelagerten Welle mit einem Sensor zur Verfügung, welcher mindestens ein im Umfeld eines an eine tragende Struktur angebundenen Lagers der Welle angeordnetes Sensorelement umfasst, welches einen in eine vorgegebene Richtung wirkenden Anteil einer Lagerkraft erfasst, aus welcher das Drehmoment der Welle berechnet werden kann. Hierbei weist der Sensor mindestens einen Sensorkörper mit einer Außenkontur auf, welcher ein korrespondierendes Sensorelement trägt und in eine Aufnahmebohrung eingepresst ist, wobei das Sensorelement einen vorgegebenen Abstand und einen vorgegebenen Winkel zum Lager aufweist. Zudem ist ein Gehäuse, welches das Sensorelement aufnimmt, mit seiner Außenkontur in eine in die tragende Struktur eingebrachte Aufnahmebohrung eingepresst. Die Aufnahmebohrung für den Sensorkörper ist in eine Abstützstruktur des Gehäuses eingebracht, wobei das Gehäuse den wirkenden Anteil der Lagerkraft über die Abstützstruktur an den Sensorkörper überträgt. Dadurch übertragen sich die Materialdehnungen bzw. Materialstauchung auf das Sensorelement und können von diesem erfasst und ausgegeben werden. Es kann vorteilhaft sein, an der Außenkontur des Sensorgehäuses im Bereich des Sensorkörpers mindestens eine Aussparung vorzusehen, um eine mittige Einleitung der Kraft auf den Sensorkörper bzw. das Sensorelement zu erreichen.

Durch die in den abhängigen Ansprüchen aufgeführten Maßnahmen und Weiterbildungen sind vorteilhafte Verbesserungen der im unabhängigen Patentanspruch 1 angegebenen Sensoranordnung zur indirekten Erfassung eines Drehmoments einer rotierbar gelagerten Welle möglich.

In weiterer vorteilhafter Ausgestaltung der erfindungsgemäßen Sensoranordnung kann das mindestens eine Sensorelement als in Dünnschichttechnologie hergestelltes piezoresistives Sensorelement ausgeführt werden und einen metallischen Grundkörper aufweisen, auf welchen eine Isolationsschicht und eine Funktionsschicht aus piezoresistiven Materialen aufgebracht ist, wobei die Funktionsschicht vier Widerstandsstrukturen aufweist, welche zu einer Wheatstone-Brücke verschaltet sind. Die Materialdehnungen bzw. Materialstauchung übertragen sich auf das piezoresistive Sensorelement und führen zu einer Veränderung der ohmschen Widerstände in den einzelnen Widerstandsstrukturen. Durch die Veränderung der ohmschen Widerstände ändert sich die Ausgangsspannung der Wheatstone-Brücke. Aus diesem Spannungssignal kann somit über eine geeignete Auswerteelektronik auf das wirkende Drehmoment geschlossen werden. Der genaue Zusammenhang zwischen dem Signal der Messbrücke und der zum Drehmoment proportionalen Lagerkraft hängt von der Positionierung des Sensorelements in Bezug auf das Lager ab. Dies stellt gewisse Anforderungen an die Positions- und Herstellungstoleranzen, es eröffnet aber auch große Freiheitsgrade bei der Applikation. So lassen sich zum Beispiel mit einem einmal konzipierten Sensorentwurf auch größere Drehmomente messen, wenn man das Sensorelement lediglich in einer etwas größeren Entfernung zur Welle als zuvor oder unter einem anderen Winkel relativ zur Richtung der zu erwartenden Lagerkraft platziert. Darüber hinaus lassen sich auch mehrere Sensorelemente um das Lager platzieren, um so zum Beispiel die Richtung der Lagerkraft einer Welle unter wechselnden Bedingungen zu überwachen.

In weiterer vorteilhafter Ausgestaltung der erfindungsgemäßen Sensoranordnung kann der Sensor mindestens zwei Sensorelemente umfassen, welche an unterschiedlichen Positionen im Umfeld des Lagers angeordnet sind. Die mindestens zwei Sensorelemente können unterschiedliche Erfassungsrichtungen aufweisen und in verschiedene Richtungen wirkende Anteile der wirkenden Lagerkraft erfassen. Zudem können die Erfassungsrichtungen von zwei benachbarten Sensorelementen im Wesentlichen senkrecht zueinander verlaufen. Dadurch können auch Lagerkräfte erfasst und berechnet werden, deren Richtung sich je nach Betriebssituation ändern, wie beispielsweise bei Getrieben mit mehreren Zahnrädern auf einer Welle. Um Betrag und Richtung der wirkenden Lagerkraft exakt zu bestimmen werden Signale der mindestens zwei Sensorelemente entsprechend ausgewertet. Zudem kann auch bei festen Übersetzungsverhältnissen das Nutzsignal besser von Störgrößen getrennt werden. Um Störgrößen wie beispielsweise Querkräfte auf das Lager eliminieren zu können oder um ein redundantes Signal zu erhalten kann der Sensor auch mit mehr als zwei Sensorelementen ausgeführt werden.

In weiterer vorteilhafter Ausgestaltung der erfindungsgemäßen Sensoranordnung kann der Sensor mindestens eine Auswerteelektronik umfassen, welche mit mindestens einem Sensorelement elektrisch verbunden werden kann. Die Sensorelemente sind beispielsweise durch Drahtbonden mit je einer Leiterplatte verbunden, auf welcher sich eine geeignete Auswerteschaltung befindet.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Darstellung von mehreren Wellen und Zahnrädern zur Illustration des Zustandekommens von Lagerkräften, welche mit Ausführungsbeispielen der erfindungsgemäßen Sensoranordnung zur indirekten Erfassung eines Drehmoments einer rotierbar gelagerten Welle erfasst werden können.
Fig. 2 zeigt eine schematische Darstellung eines ersten Ausführungsbeispiels einer erfindungsgemäßen Sensoranordnung zur indirekten Erfassung eines Drehmoments einer rotierbar gelagerten Welle.
Fig. 3 zeigt eine Schnittdarstellung der erfindungsgemäßen Sensoranordnung aus Fig. 2.
Fig. 4 zeigt eine schematische Darstellung eines zweiten Ausführungsbeispiels einer erfindungsgemäßen Sensoranordnung zur indirekten Erfassung eines Drehmoments einer rotierbar gelagerten Welle.
Fig. 5 zeigt eine Draufsicht auf eine Aufnahmebohrung für einen Sensorkörper eines Sensorelements, welches in Ausführungsbeispielen der erfindungsgemäßen Sensoranordnung zur indirekten Erfassung eines Drehmoments einer rotierbar gelagerten Welle eingesetzt werden kann.
Fig. 6 zeigt eine Draufsicht auf ein Ausführungsbeispiel eines Sensorkörpers mit einem Sensorelement, welches in Ausführungsbeispielen der erfindungsgemäßen Sensoranordnung zur indirekten Erfassung eines Drehmoments einer rotierbar gelagerten Welle eingesetzt und in die Aufnahmebohrung aus Fig. 5 eingepresst werden kann.
Fig. 7 zeigt eine Schnittdarstellung der Aufnahmebohrung aus Fig. 5 und eine Schnittdarstellung des Sensorkörpers aus Fig. 6 vor dem Einpressvorgang des Sensorkörpers in die Aufnahmebohrung.
Fig. 8 zeigt eine Draufsicht auf ein Ausführungsbeispiel eines Sensorelements, welches in Ausführungsbeispielen der erfindungsgemäßen Sensoranordnung zur indirekten Erfassung eines Drehmoments einer rotierbar gelagerten Welle eingesetzt werden kann.
Fig. 9 zeigt eine Schnittdarstellung des Sensorelements aus Fig. 3.
Fig. 10 zeigt eine schematische Darstellung eines dritten Ausführungsbeispiels einer erfindungsgemäßen Sensoranordnung zur indirekten Erfassung eines Drehmoments einer rotierbar gelagerten Welle.
Fig. 11 zeigt eine Schnittdarstellung der erfindungsgemäßen Sensoranordnung aus Fig. 10.
Fig. 12 zeigt eine schematische Draufsicht auf ein Ausführungsbeispiel eines Sensors für eine erfindungsgemäße Sensoranordnung zur indirekten Erfassung eines Drehmoments einer rotierbar gelagerten Welle.
Fig. 13 zeigt eine schematische Schnittdarstellung eines vierten Ausführungsbeispiels einer erfindungsgemäßen Sensoranordnung zur indirekten Erfassung eines Drehmoments einer rotierbar gelagerten Welle.
Fig. 14 zeigt eine schematische Schnittdarstellung eines fünften Ausführungsbeispiels einer erfindungsgemäßen Sensoranordnung zur indirekten Erfassung eines Drehmoments einer rotierbar gelagerten Welle.

### Ausführungsformen der Erfindung

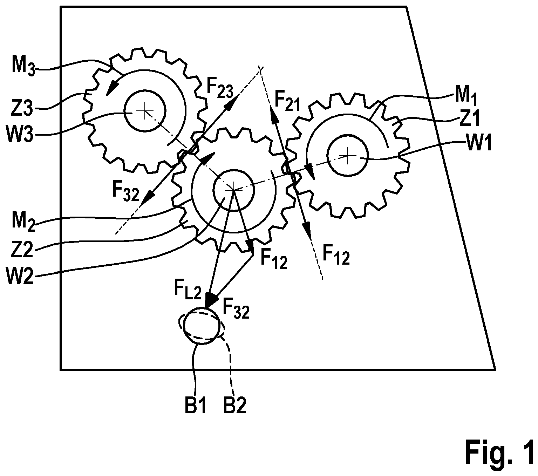

Fig. 1 dient der Illustration des Zustandekommens von Lagerkräften. Fig. 1 zeigt mehrere Wellen W1, W2, W3, welche über Zahnräder Z1, Z2, Z3 miteinander verbunden sind. Die Anordnung dient der Übertragung eines ersten Drehmoments M1 von einer ersten Welle W1 über ein zweites Drehmoment M2 einer zweiten Welle W2 auf eine dritte Welle W3, welche ein drittes Drehmoment M3 aufweist. Dies erfolgt durch die mit den Wellen W1, W3 verbundenen Zahnräder Z1 und Z3 über ein Zwischenzahnrad Z2, welches mit der zweiten Welle W2 verbunden ist. Auf ein Lager der zweiten Welle W2 wirken dabei zwei Kräfte. Zum einen wirkt eine am Berührungspunkt zwischen dem ersten Zahnrad Z1 und dem zweiten Zahnrad Z2 wirkende Kraft F₁₂ bzw. F₂₁ auch auf das Lager der zweiten Welle W2, da das zweite Zahnrad Z2 über die zweite Welle W2 dort gelagert ist. Zum anderen muss die zwischen dem dritten Zahnrad Z3 und dem zweiten Zahnrad Z2 wirkende Kraft F₃₂ bzw. F₂₃ vom Lager aufgenommen werden. Aus der Addition dieser beiden Kräfte F₁₂ und F₃₂ ergibt sich die insgesamt auf das Lager der zweiten Welle W2 wirkende Lagerkraft F_{L2}. Das Lager nimmt diese Kraft F_{L2} auf und gibt sie an die umliegende Struktur weiter. Die resultierenden Materialspannungen innerhalb dieser Struktur führen zu Materialdehnungen, die proportional zur Lagerkraft F_{L2} und damit proportional zum Drehmoment M2 sind. Hierzu wird in die das Lager 7 umgebende Struktur 3 eine Bohrung B1 eingebracht, welche durch die in Fig. 1 dargestellte Kraft F_{L2} entsprechend der gestrichelten Darstellung B2 gestaucht wird. Mittels eines piezoresistiven Sensorelements können diese Materiadehnungen erfasst werden. Anschließend wird hieraus mittels einer geeigneten Auswerteelektronik das Drehmoment M2 bestimmt.

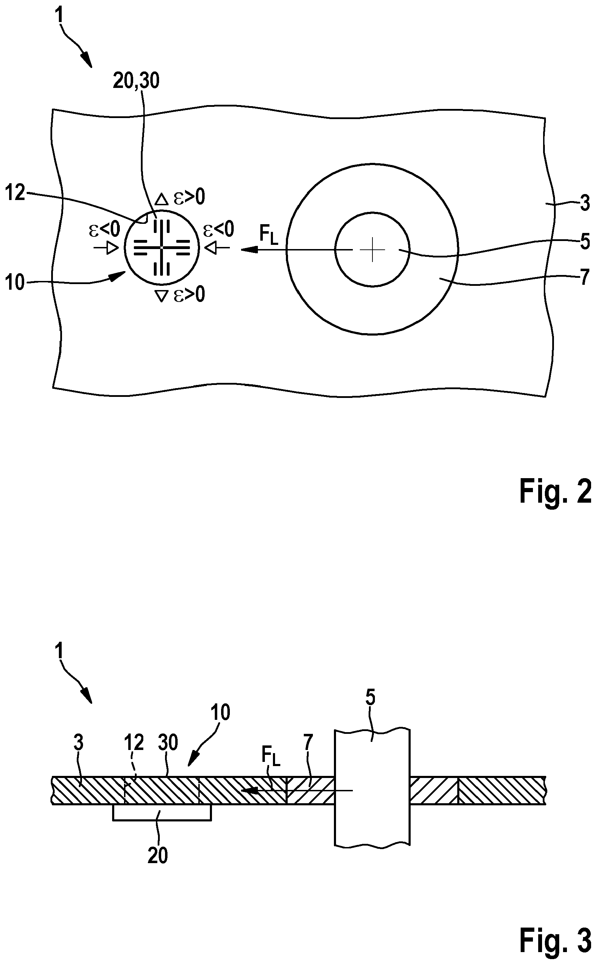

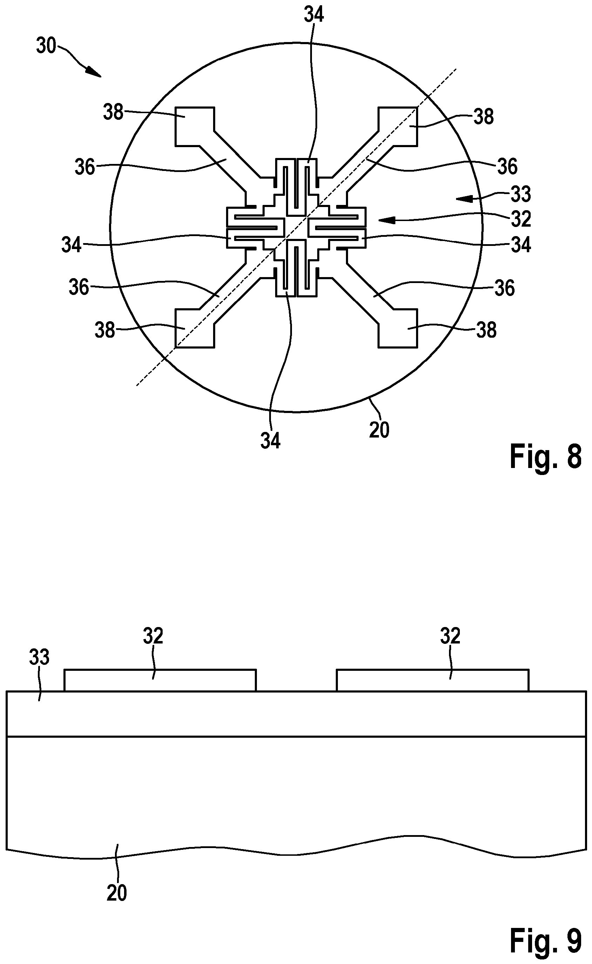

Wie aus Fig. 2 bis 14 ersichtlich ist, umfassen dargestellte Ausführungsbeispiele einer erfindungsgemäßen Sensoranordnung 1, 1A, 1B, 1C, 1D zur indirekten Erfassung eines Drehmoments einer rotierbar gelagerten Welle 5 jeweils einen Sensor 10, 10A, 10B, 10C, 10D, welcher mindestens ein im Umfeld eines an eine tragende Struktur 3 angebundenen Lagers 7 der Welle 5 angeordnetes Sensorelement 30 umfasst, welches einen in eine vorgegebene Richtung wirkenden Anteil einer Lagerkraft F_{L} erfasst, aus welcher das Drehmoment der Welle 5 berechnet werden kann. Erfindungsgemäß weist der Sensor 10, 10A, 10B, 10C, 10D mindestens einen Sensorkörper 20 mit einer Außenkontur 24 auf, welcher ein korrespondierendes Sensorelement 30 trägt und in eine Aufnahmebohrung 12, 52.1 eingepresst ist, wobei das Sensorelement 30 einen vorgegebenen Abstand und einen vorgegebenen Winkel zum Lager 7 aufweist.

Wie aus Fig. 2 und 3 weiter ersichtlich ist, weist das dargestellte erste Ausführungsbeispiel der erfindungsgemäßen Sensoranordnung 1 ein Sensorelement 30 auf, welches in eine Aufnahmebohrung 12 der tragenden Struktur 3 eingepresst ist. Analog zur Bohrung B1 in Fig. 1 wird auch die Aufnahmebohrung 12 in Fig. 2 und 3 entsprechend der eingezeichneten Kraft F_{L} gestaucht. In einer ersten Ausführungsvariante wird das Sensorelement 30 über den Sensorkörper 20 direkt in die tragende Struktur 3 eingepresst. In einer zweiten Ausführungsvariante wir das Sensorelement 30 über den Sensorkörper 20 in eine Abstützstruktur 52 eines Sensorgehäuses 50, 50A eingepresst, welches wiederum in die Aufnahmebohrung 12 eingepresst wird. In beiden Fällen überträgt sich die Stauchung auf das Sensorelement 30 und kann von diesem erfasst und ausgewertet werden.

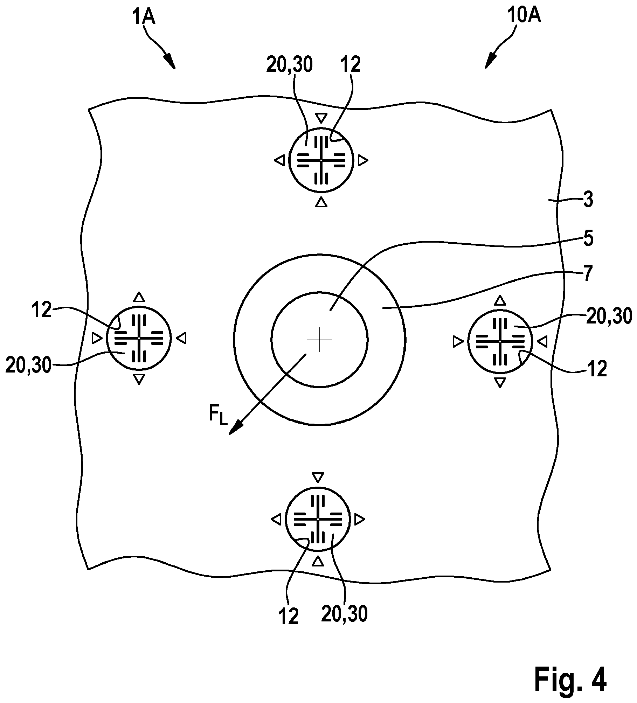

Der genaue Zusammenhang zwischen dem Ausgabesignal des Sensorelements 30 und der zum Drehmoment proportionalen Lagerkraft F_{L} hängt entscheidend von der Positionierung des Sensorelements 30 ab. Dies stellt gewisse Anforderungen an die Positions- und Herstellungstoleranzen, es eröffnet aber auch große Freiheitsgrade bei der Applikation. So lassen sich zum Beispiel mit einem einmal konzipierten Sensorentwurf auch größere Drehmomente messen, wenn man das Sensorelement 30 lediglich in einer etwas größeren Entfernung zur Welle 5 als zuvor oder unter einem anderen Winkel relativ zur Richtung der Lagerkraft F_{L} platziert. Wie aus Fig. 4 weiter ersichtlich ist, lassen sich auch mehrere Sensorelemente 30 um das Lager 7 platzieren, um so zum Beispiel die Richtung der Lagerkraft F_{L} der Welle 5 unter wechselnden Bedingungen zu überwachen.

Wie aus Fig. 4 weiter ersichtlich ist, weist der Sensor 10A im zweiten Ausführungsbeispiel der erfindungsgemäßen Sensoranordnung 1A mehrere Sensorelemente 30 auf. Hierbei ist ein erstes Sensorelement 30 in der Darstellung unterhalb des Lagers 7 angeordnet und erfasst einen nach unten wirkenden Anteil der Lagerkraft F_{L}. Ein zweites Sensorelement 30 ist in der Darstellung links neben dem Lager 7 angeordnet und erfasst einen nach links wirkenden Anteil der Lagerkraft F_{L}. Ein drittes Sensorelement 30 ist in der Darstellung oberhalb des Lagers 7 angeordnet und erfasst einen nach oben wirkenden Anteil der Lagerkraft F_{L}. Ein viertes Sensorelement 30 ist in der Darstellung rechts neben dem Lager 7 angeordnet und erfasst einen nach rechts wirkenden Anteil der Lagerkraft F_{L}. Aus den erfassten Kraftanteilen können Betrag und Richtung der wirkenden Lagerkraft bestimmt werden. Zudem können Störgrößen, wie beispielsweise Querkräfte, auf das Lager 7 eliminiert oder ein redundantes Signal erzeugt werden.

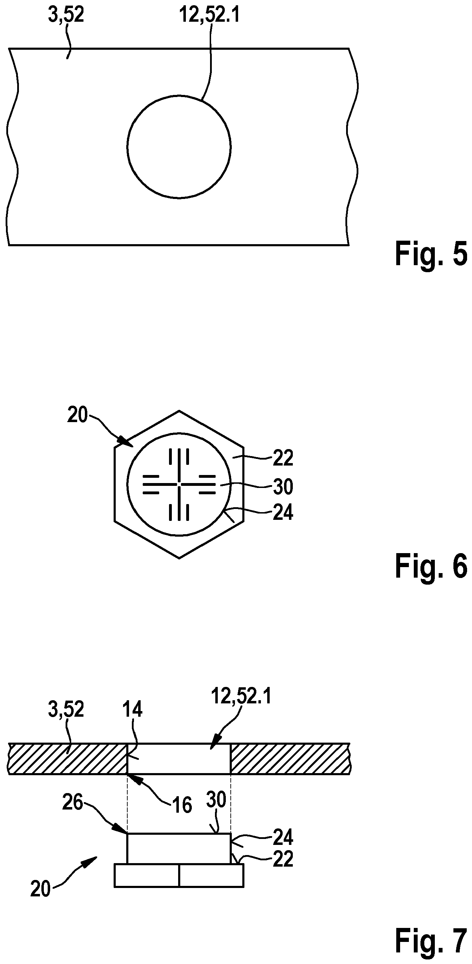

Wie aus Fig. 5 bis 9 weiter ersichtlich ist, weist das Sensorelement 30 einen Sensorkörper 20 aus Stahl, welcher eine beispielsweise durch Drehen hergestellte hochpräzise Außenkontur 24 aufweist, welche dazu geeignet ist, in eine entsprechend geformte Innenkontur 14 der Aufnahmebohrung 12, 52.1 eingepresst zu werden. Um das Einpressen zu erleichtern können am Rand der Aufnahmebohrung 12, 52.1 und am einzuführenden Rand des Sensorkörpers 20 jeweils eine Einführschräge 16, 26 ausgebildet werden. Unterhalb der hochpräzisen runden Außenkontur 24 befindet sich eine beliebig geformte Kontur, welche beim Einpressen als Anschlag 22 genutzt werden kann. Im dargestellten Ausführungsbeispiel ist die Kontur als Sechseck ausgebildet. Nach dem Fügen bzw. Einpressen kann das Sensorelement 30 durch einen oder mehrere Schweißpunkte zusätzlich gesichert werden.

Auf dem Sensorkörper 20 aus Stahl befindet sich eine Dünnschicht, die mindestens aus einer Isolationsschicht 33 (z.B. Siliziumoxid) und einer Funktionsschicht 32 besteht. Als Funktionsschicht 32 können piezoresistive Materialien, wie beispielsweise NiCr-Legierungen, Platin, Poly-Silizium, Titanoxinitrid usw. verwendet werden. Aus der Funktionsschicht 32 werden durch geeignete Verfahren, wie beispielsweise Nassätzen, Trockenätzen, Laserabtragen usw. mindestens vier Widerstände 34 strukturiert, die zu einer Wheatstone-Brücke verschaltet sind. Die Widerstandsstrukturen 34 sind typischerweise mäanderförmig ausgeführt und so angeordnet, dass sie paarweise auf Dehnungen in Raumrichtungen empfindlich sind, die senkrecht aufeinander stehen. Zuleitungen 36 zur Brücke und Kontaktierflächen 38 können in der Ebene der Funktionsschicht 32 oder in einer zusätzlichen Metallisierungsebene ausgeführt werden. Zusätzlich kann die Funktionsschicht 32 durch eine Passivierschicht (z.B. Siliziumnitrid) oder andere Maßnahmen (z.B. Vergelung) geschützt werden.

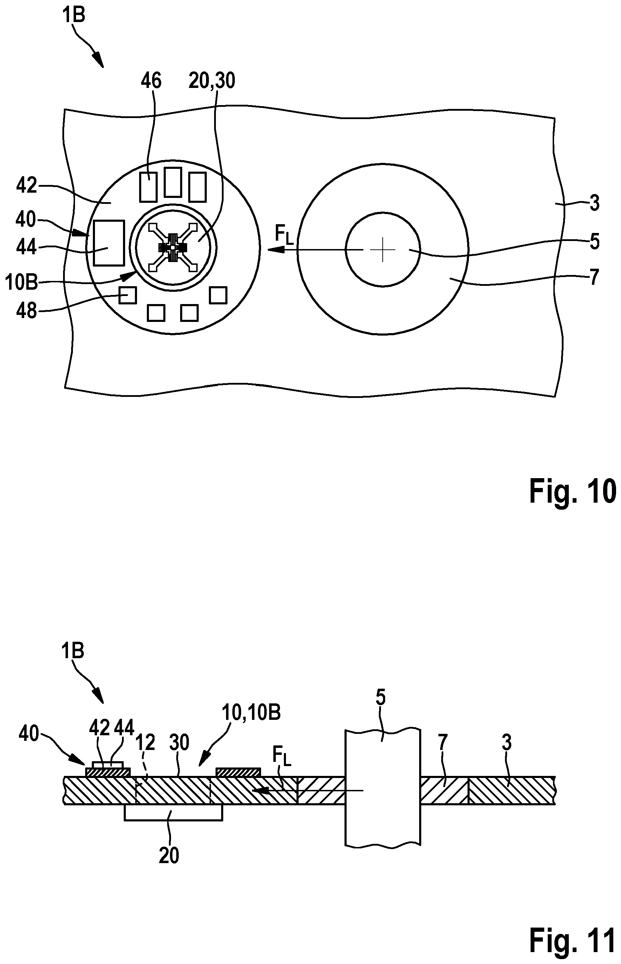

Wie aus Fig. 10 und 11 ersichtlich ist, weist der Sensor 10B im dargestellten dritten Ausführungsbeispiel der erfindungsgemäßen Sensoranordnung 1B ein Sensorelement 30, dessen Sensorkörper 20 direkt in die Aufnahmebohrung 12 der tragenden Struktur 3 eingepresst ist. Zudem weist der Sensors 10B im dargestellten Ausführungsbeispiel kein eigenes Gehäuse auf. Der Schutz des Sensorelements 30 und ein zugehörigen Auswerteelektronik 40 vor Umwelteinflüssen wird beispielsweise durch das Getriebegehäuse gewährleistet, welches hier auch die tragende Struktur 3 umfasst. Der Schutz des Sensorelements 30 und der Auswerteelektronik 40 vor Ölspritzern oder Abrieb kann durch ein Schutzgel oder eine Schutzkappe erfolgen. Das Sensorelement 30 ist über seinen Sensorkörper 20 in der Nähe des Lagers 7 in das Getriebegehäuse oder die tragende Struktur 3 innerhalb des Getriebes eingepresst. Nach dem Fügen bzw. Einpressen kann das Sensorelement es durch einen oder mehrere Schweißpunkte zusätzlich gesichert werden. Das Sensorelement 30 erfasst die aufgrund der Lagerkräfte entstehenden Materialdehnungen und wandelt diese mittels der aus Widerstandsstrukturen 34 gebildeten Brückenschaltung in eine Ausgangsspannung um. Das Sensorelement 30 ist beispielsweise durch Drahtbonden mit internen Kontaktstellen 48 einer Leiterplatte 42 verbunden, auf der sich eine geeignete Auswerteschaltung 44 befindet, die beispielsweise als ASIC (Anwendungsspezifische integrierte Schaltung) ausgeführt ist. Die Auswerteschaltung 44 wertet die Brückenspannung aus und stellt ein dem Drehmoment proportionales Ausgangssignal in Form einer Spannung (z.B. 0 - 5 V), eines Stroms (z.B. 4 - 20 mA) oder in digitaler Form bereit. Dieses Signal kann an externen Kontaktstellen 46 beispielsweise durch angelötete oder aufgesteckte Kabel abgegriffen werden. Die Spannungsversorgung des gesamten Sensors 10B erfolgt ebenfalls über diese externen Kontaktstellen 48. Über die Kabel kann das Signal nach außen geführt oder an ein ebenfalls im Getriebegehäuse integriertes Steuergerät weitergegeben werden.

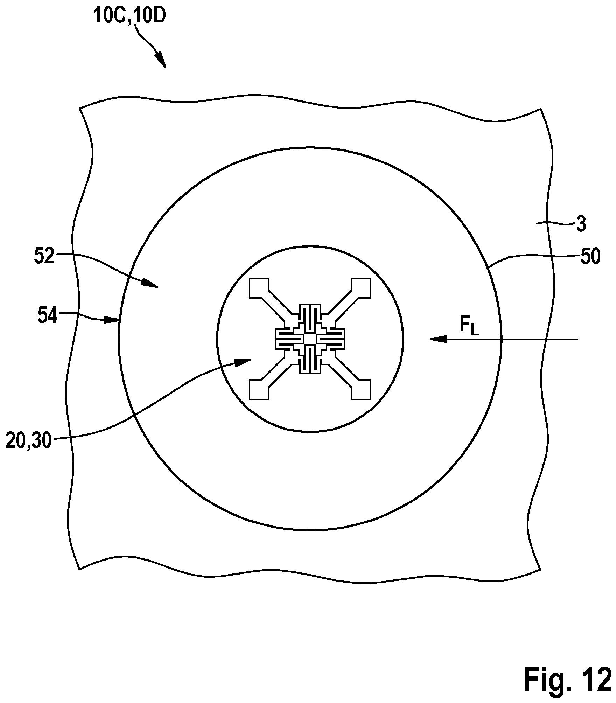

Wie aus Fig. 12 bis 14 ersichtlich ist, weist das Sensorelement 30 bei den dargestellten Ausführungsbeispielen ein Gehäuse 50, 50A auf. Das Gehäuse 50, 50A bietet viele Vorteile bei der Applikation. Das Gehäuse 50, 50A ist an seinem Einpressbereich so gestaltet, dass sich laterale Stauchungen auf das Sensorelement 30 übertragen. Das Sensorelement 30 ist über den Sensorkörper 20 in eine Aufnahmebohrung 52.1 in einer Abstützstruktur 52 eingepresst, welche radial zu diesem Teil des Gehäuses 50, 50A und damit in Richtung der äußeren Kraft F_{L} verläuft. Nach dem Fügen bzw. Einpressen kann das Sensorelement 30 durch einen oder mehrere Schweißpunkte zusätzlich gesichert werden.

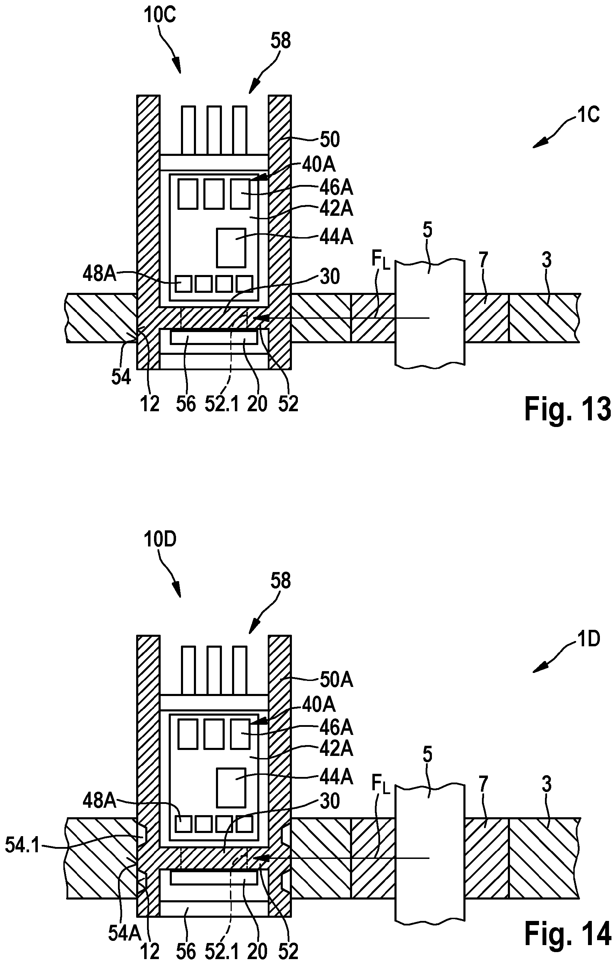

Im Bereich des Sensorelements 30 und der Abstützstruktur 52 weist das Gehäuse 50, 50A eine hochpräzise Außenkontur 54 auf, welche dazu geeignet ist, in eine entsprechend gestaltete Aufnahmebohrung 12 der tragenden Struktur 3 eingepresst zu werden. Die auf diese Weise hergestellte kraftschlüssige Verbindung sorgt dafür, dass die aufgrund der Lagerkraft F_{L} entstehenden Stauchungen über das Sensorgehäuse 50, 50A auf den Sensorkörper 20 und somit auf das Sensorelement 30 übertragen werden. Wie aus Fig. 14 weiter ersichtlich ist, weist die Außenkontur 54A das Sensorgehäuse 50A im dargestellten Ausführungsbeispiel im Bereich des Sensorelements 30 mehrere Aussparungen 54.1, um eine mittige Einleitung der Kraft F_{L} auf das Sensorelement 30 zu erreichen.

Wie aus Fig. 13 und 14 weiter ersichtlich ist, ist man bei der Gestaltung des restlichen Gehäuses 50, 50A relativ frei. Es muss lediglich darauf geachtet werden, dass über das Sensorgehäuse 50, 50A keine weiteren Kräfte in den Signalpfad eingekoppelt werden, da dies zu einer unerwünschten Querempfindlichkeit der Sensoranordnung 1C, 1D führen würde. Man erreicht dies am besten, wenn es keine weiteren Berührungspunkte vom Sensorgehäuse 50, 50A zu anderen Komponenten gibt. Eine Krafteinleitung über die Verkabelung ist ebenso zu vermeiden. Wie aus Fig. 13 und 14 weiter ersichtlich ist, besteht das Gehäuse 50, 50A bei den dargestellten Ausführungsbeispielen im Wesentlichen aus einer Stahlhülse, welche auf der einen Seite durch eine Abdeckung 56 und auf der anderen Seite durch einen Stecker 58 abgeschlossen wird. Zusammen mit einem geeigneten Stecker lässt sich solch eine Konstruktion auch hermetisch dicht ausführen, so dass ein Einsatz direkt im Getriebeöl möglich wird. Das Sensorelement 30 wandelt die Materialdehnungen analog zu den bereits beschriebenen Ausführungsbeispielen mittels der aus den Widerstandsstrukturen 34 gebildeten Brückenschaltung in eine Ausgangsspannung um. Die Signalauswertung erfolgt analog zu den bereits beschriebenen Ausführungsbeispielen. Im Unterschied zum dritten Ausführungsbeispiel, bei welchem die Leiterplatte 42 im Wesentlichen parallel zur tragenden Struktur 3 angeordnet ist, ist die Leiterplatte 42A mit der Auswerteschaltung 44A im vierten und fünften Ausführungsbeispiel senkrecht zur tragenden Struktur 3 und innerhalb des Gehäuses 50, 50A angeordnet. Analog zum dritten Ausführungsbeispiel ist das Sensorelement 30 beispielsweise durch Drahtbonden mit internen Kontaktstellen 48A elektrisch verbunden. Das Ausgangssignal der Auswerteschaltung 44A kann über die externen Kontaktstellen 46A und den Stecker 58 ausgegeben werden.

Ausführungsformen der vorliegenden Erfindung stellen eine Sensoranordnung zur indirekten Erfassung eines Drehmoments einer rotierbar gelagerten Welle zur Verfügung, welche in vorteilhafter Weise überall dort eingesetzt werden können, wo eine kostengünstige Erfassung des Drehmoments von Antriebswellen erforderlich ist.

## Patentansprüche

1. Sensoranordnung (1, 1A, 1B, 1C, 1D) zur indirekten Erfassung eines Drehmoments einer rotierbar gelagerten Welle (5), welche über ein Lager (7) an eine tragende Struktur (3) angebunden ist, mit einem Sensor (10, 10C, 10D), welcher mindestens ein Sensorelement (30) umfasst, welches mit einem vorgegebenen Abstand und einem vorgegebenen Winkel zum Lager (7) im Umfeld des Lagers (7) angeordnet ist und einen in eine vorgegebene Richtung wirkenden Anteil einer Lagerkraft (F_{L}, FL₂) erfasst, aus welcher das Drehmoment der Welle (5) berechenbar ist, wobei der Sensor (10, 10C, 10D) mindestens einen Sensorkörper (20) mit einer Außenkontur (24) aufweist, welcher ein korrespondierendes Sensorelement (30) trägt und in eine Aufnahmebohrung (52.1) eingepresst ist, **dadurch gekennzeichnet, dass** ein Gehäuse (50, 50A) das Sensorelement (30) aufnimmt und mit seiner Außenkontur (54, 54A) in eine in die tragende Struktur (3) eingebrachte Aufnahmebohrung (12) eingepresst ist, wobei die Aufnahmebohrung (52.1) für den Sensorkörper (20) in eine Abstützstruktur (52) des Gehäuses (50, 50A) eingebracht ist, wobei das Gehäuse (50, 50A) den wirkenden Anteil der Lagerkraft (F_{L}, FL₂) über die Abstützstruktur (52) an den Sensorkörper (20) überträgt.

2. Sensoranordnung nach Anspruch 1, **dadurch gekennzeichnet, dass** die eingepresste Außenkontur (54A) des Gehäuses (50A) mehrere Aussparungen (54.1) aufweist, welche eine mittige Einleitung der Lagerkraft (F_{L}) erreichen.

3. Sensoranordnung nach Anspruch 1 oder 2, **dadurch gekennzeichnet, dass** das mindestens eine Sensorelement (30) als in Dünnschichttechnologie hergestelltes piezoresistives Sensorelement ausgeführt ist und einen metallischen Grundkörper (31) aufweist, auf welchen eine Isolationsschicht (33) und eine Funktionsschicht (32) aus piezoresistiven Materialen aufgebracht ist, wobei die Funktionsschicht (32) vier Widerstandsstrukturen (34) aufweist, welche zu einer Wheatstone-Brücke verschaltet sind.

4. Sensoranordnung nach einem der Ansprüche 1 bis 3, **dadurch gekennzeichnet, dass** der Sensor (10A) mindestens zwei Sensorelemente (30) umfasst, welche an unterschiedlichen Positionen im Umfeld des Lagers (7) angeordnet sind.

5. Sensoranordnung nach Anspruch 4, **dadurch gekennzeichnet, dass** die mindestens zwei Sensorelemente (30) unterschiedliche Erfassungsrichtungen aufweisen und in verschiedene Richtungen wirkende Anteile der wirkenden Lagerkraft (F_{L}, FL₂) erfassen.

6. Sensoranordnung nach Anspruch 5, **dadurch gekennzeichnet, dass** die Erfassungsrichtungen von zwei benachbarten Sensorelementen (30) senkrecht zueinander verlaufen.

7. Sensoranordnung nach einem der Ansprüche 1 bis 6, **dadurch gekennzeichnet, dass** der Sensor (10C, 10D) mindestens eine Auswerteelektronik (40A) umfasst, welche mit mindestens einem Sensorelement (30) elektrisch verbunden ist.

## Claims

1. Sensor arrangement (1, 1A, 1B, 1C, 1D) for indirectly recording a torque of a rotatably mounted shaft (5) that is connected to a carrying structure (3) by way of a bearing (7), having a sensor (10, 10C, 10D) that comprises at least one sensor element (30) that is arranged at a predefined distance from and a predefined angle to the bearing (7) in the surroundings of the bearing (7) and records a component, acting in a predefined direction, of a bearing force (F_{L}, FL₂), from which the torque of the shaft (5) is able to be calculated, wherein the sensor (10, 10C, 10D) has at least one sensor body (20) having an outer contour (24), which sensor body carries a corresponding sensor element (30) and is pressed into a receiving bore (52.1), **characterized in that** a housing (50, 50A) receives the sensor element (30) and is pressed by way of its outer contour (54, 54A) into a receiving bore (12) incorporated into the carrying structure (3), wherein the receiving bore (52.1) for the sensor body (20) is incorporated into a support structure (52) of the housing (50, 50A), wherein the housing (50, 50A) transfers the acting component of the bearing force (F_{L}, FL₂) onto the sensor body (20) via the support structure (52).

2. Sensor arrangement according to Claim 1, **characterized in that** the pressed-in outer contour (54A) of the housing (50A) has a plurality of recesses (54.1) that achieve a central introduction of the bearing force (F_{L}).

3. Sensor arrangement according to Claim 1 or 2, **characterized in that** the at least one sensor element (30) is designed as a piezoresistive sensor element manufactured using thin-film technology and has a metal base body (31) to which an insulation layer (33) and a functional layer (32) made from piezoresistive materials are applied, wherein the functional layer (32) has four resistive structures (34) that are connected so as to form a Wheatstone bridge.

4. Sensor arrangement according to one of Claims 1 to 3, **characterized in that** the sensor (10A) comprises at least two sensor elements (30) that are arranged at different positions in the surroundings of the bearing (7).

5. Sensor arrangement according to Claim 4, **characterized in that** the at least two sensor elements (30) have different recording directions and record components, acting in different directions, of the acting bearing force (F_{L}, FL₂).

6. Sensor arrangement according to Claim 5, **characterized in that** the recording directions of two adjacent sensor elements (30) run perpendicular to one another.

7. Sensor arrangement according to one of Claims 1 to 6, **characterized in that** the sensor (10C, 10D) comprises at least one evaluation electronics system (40A) that is electrically connected to at least one sensor element (30) .

## Revendications

1. Ensemble de capteur (1, 1A, 1B, 1C, 1D) pour la détection indirecte d'un couple d'un arbre supporté à rotation (5), qui est raccordé par le biais d'un palier (7) à une structure porteuse (3), comprenant un capteur (10, 10C, 10D) qui comprend au moins un élément de capteur (30) qui est disposé à une distance prédéfinie et suivant un angle prédéfini par rapport au palier (7) dans l'environnement du palier (7) et qui détecte une proportion d'une force de palier (F_{L}, FL₂) agissant dans une direction prédéfinie, à partir de laquelle le couple de l'arbre (5) peut être calculé, le capteur (10, 10C, 10D) présentant au moins un corps de capteur (20) avec un contour extérieur (24) qui porte un élément de capteur correspondant (30) et qui est pressé dans un alésage de réception (52.1), **caractérisé en ce qu'**un boîtier (50, 50A) reçoit l'élément de capteur (30) et est pressé avec son contour extérieur (54, 54A) dans un alésage de réception (12) réalisé dans la structure porteuse (3), l'alésage de réception (52.1) pour le corps de capteur (20) étant introduit dans une structure de support (52) du boîtier (50, 50A), le boîtier (50, 50A) transmettant la proportion active de la force de palier (F_{L}, FL₂) par le biais de la structure de support (52) au corps de capteur (20).

2. Ensemble de capteur selon la revendication 1, **caractérisé en ce que** le contour extérieur pressé (54A) du boîtier (50A) présente plusieurs évidements (54.1) qui atteignent une introduction centrale de la force de palier (F_{L}).

3. Ensemble de capteur selon la revendication 1 ou 2, **caractérisé en ce que** l'au moins un élément de capteur (30) est réalisé sous forme d'élément de capteur piézorésistif fabriqué par une technologie à couches minces et présente un corps de base métallique (31) sur lequel est appliquée une couche d'isolation (33) et une couche fonctionnelle (32) en matériaux piézorésistifs, la couche fonctionnelle (32) présentant quatre structures de résistance (34) qui sont branchées pour former un pont de Wheatstone.

4. Ensemble de capteur selon l'une quelconque des revendications 1 à 3, **caractérisé en ce que** le capteur (10A) comprend au moins deux éléments de capteur (30) qui sont disposés au niveau de positions différentes dans l'environnement du palier (7).

5. Ensemble de capteur selon la revendication 4, **caractérisé en ce que** les au moins deux éléments de capteur (30) présentent des directions de détection différentes et détectent des proportions agissant dans des directions différentes de la force de palier exercée (F_{L}, FL₂) .

6. Ensemble de capteur selon la revendication 5, **caractérisé en ce que** les directions de détection de deux éléments de capteur adjacents (30) s'étendent perpendiculairement l'une à l'autre.

7. Ensemble de capteur selon l'une quelconque des revendications 1 à 6, **caractérisé en ce que** le capteur (10C, 10D) comprend au moins une électronique d'analyse (40A) qui est connectée électriquement à au moins un élément de capteur (30) .
